# EUROPÄISCHE PATENTSCHRIFT

(11) **EP 0 724 857 B1**
(45) Veröffentlichungstag und Bekanntmachung des Hinweises auf die Patenterteilung: **28.07.1999**
(21) Anmeldenummer: 95114073.0
(22) Anmeldetag: 08.09.1995
(51) Int. Cl.: A47J 43/07

(54) **Schneidmesser für einen elektrisch betriebenen Stabmixer**
Cutting knife for an electric hand mixer
Couteaux pour un pied de mixage électrique

(30) Priorität: 03.02.1995 DE 19503491
(43) Veröffentlichungstag der Anmeldung: 07.08.1996
(73) Patentinhaber: Braun Aktiengesellschaft, Frankfurt am Main (DE)
(72) Erfinder: Sinovas, Rosa Maria, San Alberto Magno, Barcelona (ES); Safont, Vicente, E-08041 Barcelona (ES); Penaranda, Mariano, E-08005 Barcelona (ES); Golob, Hans-Jürgen, D-61381 Friedrichsdorf (DE)

(56) Entgegenhaltungen:
- EP-A- 0 324 115
- DD-A- 114 901
- DE-A- 3 020 900
- DE-A- 4 321 653
- US-A- 3 368 800

## Beschreibung

Die Erfindung betrifft ein Schneidmesser für einen elektrisch betriebenen Stabmixer gemäß dem Oberbegriff des Anspruchs 1.

Derartige Schneidmesser für von Hand geführte Stabmixer werden seit vielen Jahren eingesetzt, um die unterschiedlichsten Nahrungsmittel zu zerkleinern und zu vermischen. Diese Schneidmesser können mit unterschiedlichen Geschwindigkeiten in Abhängigkeit der zu zerkleinernden Nahrungsmittel betrieben werden. Eine Forderung an solche Schneidmesser ist ein wirkungsvolles Zerkleinern der zu bearbeitenden Materialien. Darüberhinaus wird von diesen Schneidmessern gefordert, daß sie gleichzeitig eine gute Rührwirkung zeigen, um die Materialien zu vermischen und dadurch die gleichmäßige Zerkleinerung der Materialien zu unterstützen. Auch wird von diesen Messern für Stabmixer gefordert, daß beim unbeabsichtigten Eingreifen einer Hand nicht allzu gefährliche Schnittwunden entstehen.

Ein typisches Schneidmesser für Stabmixer ist aus der DE-A1-25 53 511 bekannt. Das in einer Glocke ausgebildete und rotierende Schneidmesser ist aus einem flachen Metallteil mit nach oben und nach unten in Richtung der Antriebsachse gebogenen Endabschnitten gebildet, wobei an diesen Endabschnitten die Schneidkanten einseitig angeschliffen sind.

Ein weiteres Schneidmesser ist, ebenfalls in Verbindung mit einem Stabmixer, in der DE-U 17 91 741 beschrieben. Dieses Schneidmesser besitzt einen an seinem Ende abgewinkelten Tragearm, während der andere Tragearm an seiner sich radial zu der Achse der Arbeitswelle erstreckenden Kante schaufelförmig nach oben gebogen ist, um einen Mischeffekt zu verstärken.

In der US-PS 3,368,800 ist weiterhin ein Mixer beschrieben, dessen zwei Arme aus der Ebene eines Mittelteils, das die Wellenaufnahme in Form einer Öffnung aufweist, in einer Richtung geringfügig heraus gebogen sind. Die beiden abgewinkelten Arme sind jeweils an ihren freien, radial außenliegenden Kanten sowie an einer in Umfangsrichtung des Messers vorderen Längskante angeschliffen. Aufgrund der großen Schneidwinkel ergeben sich hier weniger scharfe Schneidkanten. Bei Verkleinerung des Schneidwinkels würden hier zu große Schliffflächen der Messerschneiden entstehen, was eine aufwendigere Herstellung erfordert. Andererseits würden die Messerschneiden zu dünn und zu lang werden, was die Standzeit der Messer verringert.

Ausgehend von dem vorstehend beschriebenen Stand der Technik und den bekannten Schneidmessern liegt der vorliegenden Erfindung die Aufgabe zugrunde, ein Schneidmesser für Stabmixer zu schaffen, das eine verbesserte Schneidwirkung besitzt, gleichzeitig einen guten Mischeffekt in der Glocke des Stabmixers bewirkt, einfach und kostengünstig herstellbar ist und eine hohe Standzeit aufweist.

Die vorstehende Aufgabe wird bei einem gattungsgemäßen Schneidmesser durch die kennzeichnenden Merkmale des Anspruchs 1 gelöst. Hierdurch entsteht ein verhältnismäßig großer Arbeitsraum, der vom Schneidmesser erfaßt wird. Hierzu trägt einerseits bei, daß die Messerschneiden an den gegenüberliegenden Tragearmen an entgegengesetzten Seiten angeordnet sind und daß zusätzlich noch das Schneidmesser profiliert ist, was insbesondere zur Verbesserung der Rührwirkung beiträgt. Dabei sind, wie bei der Anordnung der Messerschneiden, auch die Profilierungen an den entgegengesetzten Oberflächen der Tragearme ausgebildet. Durch die Profilierung werden beim Lauf des Messers Verwirbelungen hervorgerufen, die zur besseren Mischwirkung beitragen.

Durch die Bildung der vorstehenden Bereiche kann einerseits auf der einen Oberfläche eine besonders wikungsvolle Abschrägfläche mit größerem Abschrägwinkel und andererseits auf der anderen gegenüberliegenden Oberfläche die Messerschneide nachträglich noch, falls dies noch gewünscht wird, auf einfache Weise bearbeitet werden, um einen für Stabmixer besonders genauen und scharfen Abschräg- bzw. Schneidwinkel zu erhalten. Dieser Schneidwinkel darf allerdings nicht so scharf sein, daß, wenn unbeabsichtigt die Hand einer Bedienungsperson in die Öffnung der Glocke eingreift, eine allzu starke Verletzung hervorgerufen wird. Durch die Profilierung wird weiterhin in vorteilhafter Weise erreicht, daß das Schneidmesser verhältnismäßig biege- und torsionssteif wird.

Durch die Merkmale des Patentanspruchs 2 werden die Nahrungsmittel besonders leicht und ohne Kraftaufwand zerkleinert, da die in die Glocke gerichtete Abschrägfläche des einen Tragearms die Nahrungsmittel in Betrieb des Stabmixers nach oben, während die nach außen aus der Glocke zeigende Abschrägfläche des anderen Tragearmes die Nahrungsmittel nach unten befördert. Dies ergibt sich aufgrund des Verlaufs der Abschrägflächen, die jeweils entgegen der Drehrichtung des Schneidmessers geneigt ist, so daß die Nahrungsmittel an dieser Abschrägfläche abprallen und bei dem nach unten gerichteten Tragearm nach oben bzw.bei dem nach oben gerichteten Tragearm nach unten umgelenkt werden. Durch dieses gegenseitige Zuwerfen und daher besonders schnelles und leichtes Zerkleinern der Nahrungsmittel wirdtrotzdem nur eine geringe Andrückkraft auf den Stabmixer erforderlich. Dies wirkt sich insbesondere bei der Zerkleinerung von festen Nahrungsmittel, wie Karotten vorteilhaft aus, da die Andrückkraft immer wesentlich größer ist als bei der Verkleinerung von flüssigeren Nahrungsmitteln.

Durch die Merkmale des Anspruchs 3 läßt sich das Schneidmesser besonders einfach herstellen, in dem es durch Stanzen, Prägen und Biegen in seine Form gebracht wird. Dabei werden insbesondere die Abschrägflächen sowie der hervorstehende Bereich für die Messerschneiden und die Neigungswinkel angeprägt.

Um verhältnismäßig "scharfe" Schneidkanten zu erreichen, werden nach einer Weiterbildung der Erfindung (Anspruch 4) Abschrägwinkel von 15 bis 30° bevorzugt. Kleinere Winkel ergeben zu scharfe Schneidkanten, die beim unbeabsichtigten Eingreifen einer Hand in die Glocke zu Verletzungen führen können. So hat sich ein Abschrägwinkel von 20° besonders gut bewährt.

Nach den Merkmalen des Patentanspruchs 6 kann, falls beim Prägevorgang die Messerschneide mittels eines spanabhebenden Bearbeitsvorganges, insbesondere Schleifen, geglättet und geschliffen werden. Darüber hinaus ergibt sich durch eine sehr einfache und damit kostengünstige Möglichkeit, die Messerschneiden in einer vorzugsweise horizontalen Schleifebene von nur einer Seite her anzuschleifen. Es ist aber auch durchaus denkbar, daß die Messerschneide im Prägevorgang ohne nachträgliche Bearbeitung planparallel zur Oberfläche der Tragarme hergestellt werden kann.

Im Hinblick auf eine einfache Fertigung velaufen die Schleifebenen der Messerschneide parallel zu denjenigen Ebenen, in denen die Oberfläche der Tragearme verlaufen (Anspruch 7). Dies ermöglicht ein einfaches Bearbeiten der Messerschneiden, ohne daß der Schleifstein an irgendwelchen Ecken des Schneidmessers anschlägt. Durch die Schaffung des Neigungswinkels wird der Höhenversatz der Messerschneiden zueinander erheblich vergrößert, so daß der die Schneidmesser überstreichende Arbeitsraum zunimmt und dafür die Bearbeitungszeit der Nahrungsmittel abnimmt.

Besonders gute Rühr- und Schneidergebnisse ergeben sich bei einem Neigungswinkel von 9° und 13°. Es hat sich in der Praxis gezeigt, daß ein Neigungswinkel von 11° alle Vorteile mit sich bringt (Anspruch 8).

Durch die Merkmale des Patentanspruchs 9 werden die an dem gegenüberliegenden Klingen ausgebildeten Schneidkanten zueinander noch mehr in ihrer Höhe versetzt, als dies bereits durch die wechselseitige Ausbildung der Messerschneiden an den Tragearmen erfolgt.Hierdurch wird ein noch größerer Raum von den Tragearmen und Schneidkanten erfaßt, so daß die Nahrungsmittel in noch kürzerer Zeit zerkleinert und vermischt werden können. Dabei orientiert sich der Neigungswinkel immer nach der Anordnung der Messerschneide gegenüber der Horizontalen. Ist also Messerschneide unterhalb der Horizontalen angeordnet, so verläuft der Winkel gegenüber der Horizontalen nach unten. Auf der anderen Seite verläuft dann entsprechend die Messerschneide nach oben, also erstreckt sich der Neigungswinkel von der Horizontalen ebenfalls nach oben. Durch diese Anordnung werden die beim Rühr- und Zerkleinerungsvorgang von den Nahrungsmitteln auf das Schneidmesser einwirkenden Axialkräfte klein gehalten. Dies wirkt sich wiederum positiv auf die Lageranordnung im Stabmixer aus, in der dieser Axialkräfte abgestützt werden. In der Regel erfolgt diese Abstüzung über die mit der Antriebswelle verbundene Rotationsachse, die Teil des elektrischen Antriebsmotors ist, der oberhalb der Glocke im Gehäuse des Stabmixers drehfest befestigt ist.

Durch die Merkmale des Anspruchs 10 wird aufgrund der besonders langen, sowohl in radialer wie in Umfangsrichtung verlaufenden Schneidkante, deren Verlängerung durch den Fortsatz gebildet wird, ein Schneidmesser geschaffen, das eine lange Standzeit hinsichtlich der Schneidschärfe aufweist. Ebenso wird durch den Fortsatz die Schneidqualität verbessert, da die Nahrungsmittel mit geringerem Energie aufwand geshnitten werden.

Weitere Einzelheiten und Merkmale des erfindungsgemäßen Schneidmessers ergeben sich aus der nachfolgenden Beschreibung eines Ausführungsbeispiels anhand der Zeichnung.

In der Zeichnung zeigt
- Figur 1: eine Ansicht von unten in Richtung Z auf ein Schneidmesser nach Fig. 2,
- Figur 2: Seitenansicht in Richtung X auf das Schneidmesser nach Fig. 1 und
- Figur 3: einen Schnitt entlang der Schnittlinie III-III nach Fig. 2.

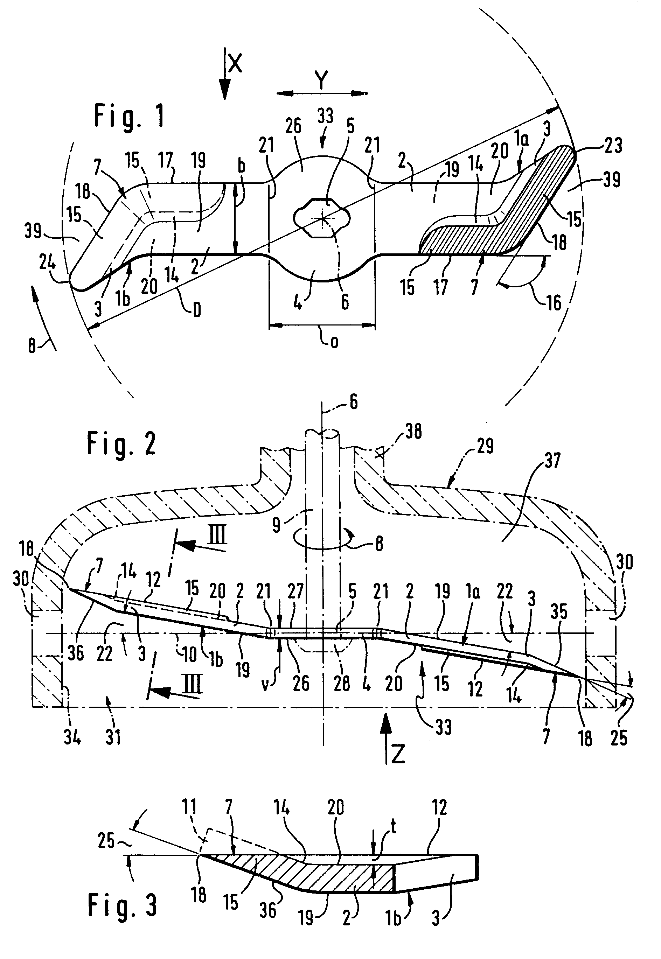

Das Schneidmesser 33, wie es in den Figuren 1, 2 und 3 dargestellt ist, weist zwei Tragearme 1a und 1b auf, von denen jeder L-förmig mit einem Schenkel 2 und einem kurzen Fortsatz 3 versehen ist. Die Tragarme 1a und 1b sind mit einem Mittelteil 4 verbunden, das eine zentrale Öffnung 5 als Aufnahme einer in der Zeichnung gestrichelt dargestellten Antriebswelle 9 besitzt und deren Oberflächen 26,27 parallel zur horizontalen 10 verlaufen. Die Achse 6 der Antriebswelle 9, die in der zentralen Öffnung 5 durch einen Nietkopf 28 (gestrichelt dargestellt) befestigt wird, bzw. die Drehachse des Schneidmessers 33, ist mit dem Bezugszeichen 6 gekennzeichnet.

Die Antriebswelle 9 ist, wie dies beispielsweise aus der DE-U 17 91 741 hervorgeht, in einem Gehäuseschaft drehbar gelagert und mit einem Elektromotor verbunden, der über einen Schalter ein- bzw. ausschaltbar ist. Der in diesem Gebrauchsmuster gezeigte Stabmixer entspricht dem angemeldeten Stabmixer, so daß weitere, in der Anmeldung nicht gezeigte Einzelheiten der Einfachheit halber diesem Stabmixer entnommen werden können.

Das Schneidmesser 33 ist in einer nach unten hin offenen Glocke 29 drehbar gelagert, wie dies insbesondere Fig. 2 zeigt. Die Glocke 29 weist Durchlässe 30 auf, über die die von dem Schneidmesser 33 über die Öffnung 31 angesaugten Nahrungsmittel wieder nach außen befördert werden. Die Innenwand 34 der Glocke 29 verläuft in geringem Abstand zu den äußeren Schneidecken 23, 24.

An den nach Fig. 1 in Drehrichtung 8 vorderen Abschnitten der Tragearme 1a und 1b, d.h., an dem Schenkel 2 und dem Fortsatz 3 ist jeweils ein erhabener Bereich 15 ausgebildet, dessen Oberfläche zu einer Messerschneide 7 angeschliffen ist, die, in Drehrichtung 8 gesehen, am freien Ende an den Schneidkanten 17, 18 und an den Oberflächen 20 an der Stufe 14 endet. Zur Verdeutlichung wurde die Messerschneide 7 in Fig. 1 auf der rechten Seite schraffiert dargestellt, da sie dort von oben sichtbar ist, während sie hingegen auf der linken Seite nach unten in die Zeichenebene zeigt. Die Messerschneide 7 verläuft, beginnend von den Abknickungen 21, sowohl entlang der sich radial erstreckenden Schneidkante 17 des Schenkels 2 als auch über die radial außenliegende freie Schneidkante 18 des Fortsatzes 3 der Tragearme 1a und 1b. Dabei verläuft die Stufe 14 der Messerschneide 7 parallel zu den Schneidkanten 17, 18. Die schraffierte sichtbare Fläche der rechten Messerschneide 7 stellt nach Fig. 1 den geschliffenen und erhabenen Bereich 15 dar. Wie anhand der Fig. 2 zu erkennen ist, verläuft die Messerschneide 7 des rechten Tragearms 1a auf der nach unten zeigenden Oberfläche 20 des Schneidmessers 33, während die andere Messerschneide 7 an dem linken Tragearm 1b an der nach oben zeigenden Oberfläche 20 verläuft.

An dieser Stelle sei erwähnt, daß der Einfachheit halber für entsprechend gleiche Teile sowohl auf der rechten wie auf der linken Seite der Tragearme 1a und 1b fast durchaus gleiche Bezugszeichen gewählt wurden.

In Figur 2 ist zwischen der Horizontalen 10 und der Oberfläche 19 bzw. 20 der Schenkel2 sowie der Fortsätze 3 ein Neigungswinkel 22 ausgebildet. Der Neigungswinkel 22 beginnt jeweils an der Abknickstelle 21, die im wesentlichen parallel zu der Achse 6 verläuft. Durch den Neigungswinkel 22 einerseits und dem hervorstehenden Bereich 15 andererseits liegen die Schneidkanten 17, 18 an den gegenüberliegenden Seiten der Tragearme 1a und 1b, radial nach außen verlaufend, auf unterschiedlichen Höhen bzw. unterschiedlichen Ebenen, was insbesondere zu besseren Schneid- und Mischergebnissen führt. Die am weitesten voneinander entfernten Punkte, die auf dem Durchmesser D liegen, bilden die Schneidecken 23, 24. Der Durchmesser D beträgt dabei etwa 50 mm. Die Breite b des Mittelteils 4 und der Tragearme 1a, 1b sind gleich groß und betragen etwa 7 mm. Die Dicke v des Schneidmessers 33 beträgt etwa 1 mm.

Das Schneidmesser 33 ist als Präge-Stanzteil aus einem dünnen Metallblech aus nicht rostendem Stahl hergestellt. Zunächst wird die Kontur des Schneidmessers mit der Öffnung 5 ausgestanzt und anschließend dieses so vorgestanzte Teil einem Prägevorgang zugezogen, wobei die Stufe 14, die Abknickstellen 21, und insbesondere die Neigungsflächen 35, 36 hergestellt werden, wobei sich letztere insbesondere durch Kaltverformung des Materials ergeben. Durch den dabei eintretenden KaltschmiedePrägevorgang wird noch eine weitere Verfestigung des zwischen dem Abschrägwinkel 25 liegenden hervorstehenden Bereichs 15 erreicht, was sich insbesondere auf die Verschließfestigkeit des Schneidmessers 33 und somit der Schneidkanten 18 vorteilhaft auswirkt. Es ist aber selbstverständlich auch denkbar, daß der Stanz- und Prägevorgang in einem einzigen Arbeitsgang erfolgen.

Um anschließend die Messerschneide 7 zu schärfen, wird der hervorstehende Bereich 11 bis zu einer Ebene 12 abgeschliffen, so daß nur noch der vorstehende Bereich 15 stehenbleibt. Der Abschleifvorgang erfolgt soweit, bis die für Stabmixer hergestellten Schneidkanten 17, 18 gerade scharf genug sind, allerdings nicht so scharf, daß empfindliche Verletzungen beim unbeabsichtigten Eingreifen eines Fingers der Hand einer Bedienungsperson entstehen. Da die Messerschneiden 7 im wesentlichen parallel zur Oberfläche 20 der Tragearme 1a und 1b verlaufen, läßt sich auch die Messerschneide 7 besonders einfach herstellen, weil über diese Fläche mit einem Schleifwerkzeug gefahren werden kann, ohne daß andere hervorstehende Teile des Schneidmessers das Schleifwerkzeug (nicht dargestellt) hindern. Je flacher der Abschrägwinkel 25 ist, desto schärfer werden die Schneidkanten 17, 18, desto geringer ist aber die Standzeit der Klingen und desto höher ist dann auch die Verletzungsgefahr. Als besonders vorteilhaft hat sich ein Abschrägwinkel von 20° für das in den Figuren 1 bis 3 dargestellte Schneidmesser 33 ergeben, daß ausschließlich nur für Stabmixer verwendet werden kann. Letzteres ergibt sich insbesondere durch den Verlauf der Tragearme 1a und 1b, durch die die Nahrungsmittel besonders stark nach außen gefördert werden, damit sie über die in der Glocke 29 ausgebildeten Schlitze 30 nach außen treten kann.

Wie weiterhin die Figuren zeigen, wird durch die Profilierung der Tragearme 1a und 1b beim Prägen die Stufe 14 gebildet, die sich bei dem linken Tragearm 1b nach Fig. 2 auf der Oberfläche 19 des Schenkels 2 und des Fortsatzes 3 befindet. Die Stufe 14 ist auf der rechten Seite nach Fig. 2 erkennbar, während sie auf der linken Seite durch den hervorstehenden Bereich 15 verdeckt und daher gestrichelt dargestellt ist. Durch die Stufe 14 wird bei einer Drehung des Schneidmessers 33 in Richtung des Drehpfeils 8 neben einem guten Schneiden insbesondere auch ein wirkungsvolles Rühren erzielt, da die Nahrungsmittel beim Aufprallen an der Stufe 14 umgelenkt und so gut durchgerührt werden. Gleiches gilt für die Neigungsflächen 35, 36, die aufgrund ihrer Anordnung zusätzlich noch den Vorteil haben, daß sie sich die Nahrungsmittel im wahrsten Sinne des Wortes zuwerfen. Dies wird dadurch erreicht, daß, in Drehrichtung 8 gesehen, nach Fig. 2 die Neigungsfläche 35 nach oben und die Neigungsfläche 36 nach unten gerichtet sind, so daß von dem rechten Tragearm die Nahrungsmittel nach oben und vom linken Tragearm die Nahrungsmittel nach unten befördert werden bzw. dort abprallen. Hierdurch werden die Nahrungsmittel in besonders kurzer Zeit zerkleinert. Durch diese Anordnung der Neigungsflächen werden auch die auf die Antriebswelle 9 beim Rührvorgang einwirkenden Axialkräfte gering gehalten, so daß die im Schaft 38 und dem sich anschließenden elektrischen Antriebsmotor (nicht dargestellt) befindlichen Lageranordnungen weniger beansprucht werden. Der Schaft 38 stellt eine Verlängerung der Glocke 29 dar, an den sich dann das mit dem Elektromotor befindliche Motorgehäuse nach oben gemäß Fig. 2 anschließt.

Wie aus Fig. 1 weiter zu erkennen ist, schließt sich an die Schenkel 2 entgegen der Drehrichtung 8 verlaufende Fortsätze 3 an, die mit den Schneidkanten 18 eine gemeinsame Schneidkante 18 bilden. Die horizontal gerichteten Schneidkanten 17 des Schenkels 2 und die am radial äußeren Rand schräg nach oben (rechte Seite) bzw. schräg nach unten (linke Seite) verlaufenden Schneidkanten 18 bilden einen Winkel 16, der größer 90° ist, vorzugsweise zwischen 90 und 160°. Besonders gute Schneidergebnisse ergeben sich bei einem Winkel von 120°, denn hier ist der von der Innenwand 34 der Glocke 29 und der Schneidkante 18 gebildete Raum 39 ausreichend groß, um auch festere Nahrungsmittel, wie Mohrrüben, Äpfel, etc. in größeren Stücken dort aufzunehmen, einzuklemmen und anschließend zu schneiden.Dies erfolgt allerdings bei hohen Drehzahlen des Stabmixers von etwa 3.000 bis 10.0000 Umdrehungen pro Minute.

Gleichzeitig ermöglicht der Winkel von 120° eine ausreichende Länge der Schneidkante 18, damit die Standzeit des Messers 33 besonders hoch ist.

Der zwischen den Abknickungen 21 liegende Abstand o trägt etwa 10 mm, während die Stufe 14 etwa 0,4 mm beträgt.

## Patentansprüche

1. Schneidmesser (33) für einen elektrisch betriebenen Stabmixer zum Zerkleinern, Rühren und Pürieren von Nahrungsmitteln, das in einer Glocke (29) ausgebildet und am Ende einer rotierend angetriebenen Arbeitswelle (9) befestigt ist, das weiterhin mit mindestens zwei sich radial und diametral von der Achse (6) der Arbeitswelle (9) erstreckenden Messertragearmen (1a und 1b) versehen ist, die jeweils an den in Drehrichtung (8) vorderen Messerschneiden (7) Schneidkanten (17, 18) aufweisen,
**dadurch gekennzeichnet**,
daß die Messerschneide (7) des einen Tragearmes (1b) nach oben und die Messerschneide (7) des anderen Tragearmes (1a) nach unten gerichtet sind, daß im Bereich der Messerschneiden (7) die Schenkel (2) derart profiliert sind, daß ein über die Oberfläche (20) der Tragearme (1a und 1b) hervorstehender Bereich (11, 15) gebildet ist, daß der hervorstehende Bereich (15) an der einen Seite von der Messerschneide (7) und an der anderen Seite von einer nach außen zur Schneidkante (18) verlaufenden Abschrägfläche (35, 36) begrenzt ist und daß die Messerschneide (7) und die Abschrägfläche (35,36) einen Abschrägwinkel (25) einschließen.

2. Schneidmesser nach Anspruch 1,
**dadurch gekennzeichnet,**
daß die Abschrägfläche (35) des unteren Tragearmes (1a) zum Innenraum (37) der Glocke (29), während die Abschrägfläche (36) des oberen Tragearms (1b) aus der Öffnung (31) der Glocke (29) gerichtet ist.

3. Schneidmesser nach Anspruch 1,
**dadurch gekennzeichnet,**
daß das Schneidmesser (33) ein Stanzteil ist, an dem der vorstehende Bereich (15) durch Prägen angeformt ist.

4. Schneidmesser nach Anspruch 1,
**dadurch gekennzeichnet,**
daß der Abschrägwinkel (25) 15 bis 30°, vorzugsweise 20°, beträgt.

5. Schneidmesser nach Anspruch 1,
**dadurch gekennzeichnet,**
daß die Ebenen (12) der beiden Messerschneiden (7) im wesentlichen parallel zur Oberfläche (20) der Tragearme (1a und 1b) verlaufen, wobei zwischen den Ebenen (12) der Messerschneiden (7) und der Oberfläche (20) der Tragarme (1a und 1b) ein geringer Versatz mit dem Abstand (t) derart gebildet ist, daß die Ebenen (12) der Messerschneiden (7) gegenüber der Oberfläche (20) hervorstehen.

6. Schneidmesser nach Anspruch 5,
**dadurch gekennzeichnet,**
daß der hervorstehende Bereich (15) zur Bildung der Messerschneide (7) angeschliffen ist.

7. Schneidmesser nach Anspruch 1,
**dadurch gekennzeichnet,**
daß die Tragearme (1a und 1b) gegenüber der zur Arbeitswelle (6) senkrecht verlaufenden Horizontalen (10) um einen Neigungswinkel (22) geneigt sind und daß der Neigungswinkel (22) von der Horizontalen (10) aus jeweils in diejenige Richtung verläuft, in die die Oberflächen der Messerschneiden (7) gerichtet sind.

8. Schneidmesser nach Anspruch 8,
**dadurch gekennzeichnet,**
daß sich der Neigungswinkel (22) zwischen 9° und 13° erstreckt, vorzugsweise bei 11°, liegt.

9. Schneidmesser nach Anspruch 1
**dadurch gekennzeichnet,**
daß die Schneidkanten (17, 18) an der in Drehrichtung (8) sowohl vorderen wie umfangsseitigen Stirnwand ausgebildet sind, daß die Schneidkanten (17, 18) unter einem Winkel (16) von 90° bis 160°, vorzugsweise 120°, zueinander verlaufen, daß die Schenke (2) der Tragarme (1a und 1b) an ihrem in Drehrichtung (8) hinteren freien und radial äußeren Ende über einen Fortsatz (3) abgewinkelt sind, über den sich die Messerschneide (7) hinaus verlängert.

10. Schneidmesser nach Anspruch 9
**dadurch gekennzeichnet,**
daß die Breite (b) des Tragearmes etwa 7 mm, der die Schneidecken (23, 24) bestimmende Außendurchmesser (D) etwa 50 mm, der Abstand (o) , der den Beginn der Neigungswinkel (22) festlegt, etwa 18 mmm und die Dicke des Bleches des Schneidmessers (33) etwa 1 mm betragen.

## Claims

1. A blade (33) for use in an electrically operated handheld blender for comminuting, agitating and puréeing food materials, which is provided in a bell-shaped lid (29) and attached to the end of a rotatingly driven operating shaft (9), further including at least two blade supporting arms (1a and 1b) which extend radially and diametrically from an axis (6) of the operating shaft (9) and each have cutting edges (17, 18) at the leading knife-edges (7) in a direction of rotation (8),
**characterized** in that the knife-edge (7) of the one supporting arm (1b) is directed upwardly and the knife-edge (7) of the other supporting arm (1a) is directed downwardly, in that legs (2) are profiled such in the area of the knife-edges (7) that a portion (11, 15) projecting from a surface (20) of the supporting arms (1a and 1b) is formed, in that the projecting portion (15) is confined by the knife-edge (7) on the one side and by a chamfered surface (35, 36) extending outwardly to the cutting edge (18) on the other side, and in that the knife-edge (7) and the chamfered surface (35, 36) enclose a chamfer angle (25).

2. A blade as claimed in claim 1,
**characterized** in that the chamfered surface (35) of the lower supporting arm (1a) is directed to the interior (37) of the bell-shaped lid (29), while the chamfered surface (36) of the upper supporting arm (1b) faces out of the opening (31) of the bell-shaped lid (29).

3. A blade as claimed in claim 1,
**characterized** in that the blade (33) is a punched part on which the projecting portion (15) is formed by stamping.

4. A blade as claimed in claim 1,
**characterized** in that the chamfer angle (25) ranges from 15° to 30°, preferably is 20°.

5. A blade as claimed in claim 1,
**characterized** in that the planes (12) of the two knife-edges (7) extend substantially in parallel to the surface (20) of the supporting arms (1a and 1b), with the planes (12) of the knife-edges (7) and the surface (20) of the supporting arms (1a and 1b) being slightly offset relative to each other by a distance (t) such that the planes (12) of the knife-edges (7) project with respect to the surface (20).

6. A blade as claimed in claim 5,
**characterized** in that the projecting portion (15) is ground to form the knife-edge (7).

7. A blade as claimed in claim 1,
**characterized** in that the supporting arms (1a and 1b) are inclined by an angle of inclination (22) with respect to the horizontal line (10) extending perpendicular to the operating shaft (6), and in that the angle of inclination (22) extends from the horizontal line (10) respectively in that direction to which the surfaces of the knife-edges (7) point.

8. A blade as claimed in claim 7,
**characterized** in that the angle of inclination (22) ranges between 9° and 13°, preferably is 11°.

9. A blade as claimed in claim 1,
**characterized** in that the cutting edges (17, 18) are formed on both the leading and the circumferential end wall, viewed in the direction of rotation (8), in that the cutting edges (17, 18) extend with respect to each other at an angle (16) of 90° to 160°, preferably 120°, and in that the legs (2) of the supporting arms (1a and 1b) at their rear free and radially external end, when viewed in the direction of rotation (8), are bent off by way of an extension (3) beyond which the knife-edge (7) is extended.

10. A blade as claimed in claim 9,
**characterized** in that the width (b) of the supporting arm amounts to roughly 7 mms, the external diameter (D) determining the cutting corners (23, 24) amounts to roughly 50 mms, the distance (o) defining the beginning of the angles of inclination (22) amounts to roughly 18 mms, and the thickness of the sheet metal of the blade (33) amounts to roughly 1 mm.

## Revendications

1. Couteau (33) pour un mixeur à tige, mû électriquement, pour fragmenter, agiter et broyer finement des denrées alimentaires, qui est disposé dans une cloche (29) et est fixé à l'extrémité d'un arbre de travail (9) entraîné en rotation, et qui est en outre pourvu d'au moins trois bras porte-couteaux (1a et 1b) qui s'étendent radialement et diamétralement par rapport à l'axe (6) de l'arbre de travail (9) et possèdent des arêtes de coupe (17, 18) disposées respectivement sur les tranchants (7) du couteau qui sont disposés en avant dans le sens de rotation,
caractérisé en ce
que les tranchants (7) d'un bras porte-couteau (1b) sont dirigés vers le haut et les tranchants (7) de l'autre bras du porte-couteau (1b) sont dirigés vers le bas, que dans la zone des tranchants (7) du couteau, les branches (2) des bras porte-couteaux sont profilés de telle sorte qu'est formée une partie (11, 15), qui fait saillie au-dessus de la surface (20) des bras de support (1a et 1b), que la partie saillante (15) est limitée d'un côté par le tranchant (7) du couteau et de l'autre côté par une surface en biseau (35, 36) qui s'étend vers l'extérieur par rapport à l'arête de coupe (18) et que le tranchant (7) du couteau et la surface en biseau (35, 36) sont inclinées l'un par rapport à l'autre d'un angle d'inclinaison (25).

2. Couteau selon la revendication 1, caractérisé en ce
que la surface en biseau (35) du bras de support (1a) est dirigée vers l'espace intérieur (37) de la cloche (29), tandis que la surface en biseau (36) du bras de support supérieur (1b) est dirigée vers l'ouverture (31) de la cloche (29).

3. Couteau selon la revendication 1, caractérisé en ce
que le couteau (33) est une pièce découpée, sur laquelle la partie saillante (15) est formée par matriçage.

4. Couteau selon la revendication 1, caractérisé en ce
que l'angle de biseau (25) est compris entre 15 et 30° et est égal de préférence à 20°.

5. Outil de coupe selon la revendication 1, caractérisé en ce
que les plans (12) des deux tranchants (7) du couteau sont sensiblement parallèles à la surface (20) des bras de support (1a et 1b), auquel cas un faible décalage correspondant à la distance (t) entre les plans (12) des tranchants (7) du couteau et la surface (20) des bras de support (1a et 1b) est formé de telle sorte que les plans (12) des tranchants (7) du couteau font saillie par rapport à la surface (20).

6. Outil selon la revendication 5, caractérisé en ce
que la partie saillante (15) est affûtée pour la formation des tranchants (7) du couteau.

7. Couteau selon la revendication 1, caractérisé en ce
que les bras de support (1a et 1b) sont inclinés d'un angle d'inclinaison (29) par rapport à l'horizontale (10) qui est perpendiculaire à l'arbre de travail (6) et que l'angle d'inclinaison (22) s'étend à partir de l'horizontale (10) respectivement dans la direction, dans laquelle sont orientées les surfaces des tranchants (7) des couteaux.

8. Couteau selon la revendication 7, caractérisé en ce
que l'angle d'inclinaison (22) est compris entre 9° et 13° et est égal de préférence à 11°.

9. Couteau selon la revendication 1, caractérisé en ce
que les arêtes de coupe (17, 18) sont formées aussi bien sur la paroi frontale avant, dans le sens de rotation (8), que sur la paroi frontale circonférentielle, que les arêtes de coupe (17, 18) font entre elles un angle (16) compris entre 90° et 160° et de préférence égal à 120°, que les branches (2) des bras de support (1a et 1b) sont coudées, au niveau de leur extrémité arrière libre, dans le sens de rotation (8), et extérieure du point de vue radial grâce à la présence d'un prolongement (3), au-delà duquel se prolonge le tranchant (7) du couteau.

10. Couteau selon la revendication 9, caractérisé en ce
que la largeur (b) du bras de support est égale à environ 7 mm, que le diamètre extérieur (D), qui détermine les coins (23, 24) du couteau, est égal à environ 50 mm, que la distance (o) qui fixe le début de l'angle d'inclinaison (22), est égale à environ 18 mm et que l'épaisseur de la tôle du couteau (33) est égale approximativement à 1 mm.
